Europäisches Patentamt

European Patent Office

Office européen des brevets

(11) Numéro de publication: **0 243 260**
**A1**

## (12) DEMANDE DE BREVET EUROPEEN

(21) Numéro de dépôt: 87400912.9

(22) Date de dépôt: 21.04.87

(51) Int. Cl.⁴: **C 09 J 5/00**

(30) Priorité: 22.04.86 FR 8605812

(43) Date de publication de la demande:
28.10.87 Bulletin 87/44

(84) Etats contractants désignés:
AT BE CH DE ES FR GB GR IT LI LU NL SE

(71) Demandeur: **CENTRE TECHNIQUE DU BOIS ET DE L'AMEUBLEMENT**
**10 avenue Saint-Mandé**
**F-75012 Paris (FR)**

(72) Inventeur: **Elbez, Gérard**
**54 rue de Belleplace**
**F-94190 Villeneuve St Georges (FR)**

**Schambourg, Françoise**
**lieudit des Quatre-Vents Lot no 3**
**F-78120 Orphin (FR)**

(74) Mandataire: **Combe, André et al**
**CABINET BEAU DE LOMENIE 55, rue d'Amsterdam**
**F-75008 Paris (FR)**

(54) Procédé pour obtenir l'optimisation du collage entre deux pièces, dont l'une au moins est en bois.

(57) La présente invention concerne un procédé pour optenir l'optimisation de collage entre deux pièces dont l'une au moins est en bois, caractérisé en ce que l'on ajoute à l'adhésif un agent tensio-actif compatible qui permet de minimaliser la valeur de l'énergie libre de mouillage $E_W$ de ladite surface du bois par le mélange adhésif (adhésif et agent tensio - actif) utilisé.

EP 0 243 260 A1

## Description

<u>Procédé pour obtenir l'optimisation du collage entre deux pièces, dont l'une au moins est en bois.</u>

La présente invention concerne un procédé pour obtenir l'optimisation du collage entre deux pièces, dont l'une au moins est en bois.

Le collage est, par définition, l'association de façon durable et aussi solide que possible, de deux surfaces par l'intermédiaire d'un produit appelé adhésif (ou colle).

On recherche depuis longtemps des moyens pour optimaliser ce collage, c'est-à-dire pour faire en sorte que les forces de liaisons physiques et/ou chimiques responsables de ce collage soient aussi élevées que possible.

Or cette optimalisation dépend à la fois des matériaux à coller (nature du matériau, état de sa surface ...) et de l'adhésif utilisé.

La présente invention concerne un procédé pour réaliser cette optimisation du collage.

Il a été trouvé, et cela constitue le fondement de la présente invention, que l'optimalisation du collage de deux objets, dont l'un au moins est en bois ou présente une surface à coller en bois, nécessite une minimalisation de l'énergie libre de mouillage de ladite surface en bois par la colle utilisée.

Cette énergie libre de mouillage a pour expression $E_W = \gamma_{LA}(\cos\theta - 1)$ dans laquelle - $\gamma_{LA}$ est l'enthalpie interfaciale liquide-air de l'adhésif utilisé

- $\theta$ est l'angle de raccordement adhésif-substrat résultant de l'équilibre du dépôt d'une goutte calibrée d'adhésif sur ladite surface bois.

Pour faire varier cette énergie libre de mouillage, il conviendra selon l'invention d'ajouter à l'adhésif, avant d'étendre ledit adhésif sur la surface bois à coller, un agent tensio-actif compatible avec ledit adhésif et susceptible, par action sur au moins un des facteurs déterminant $E_W$, de provoquer une diminution aussi élevée que possible de la valeur de $E_W$.

Un agent tensio-actif sera considéré comme compatible à avec l'adhésif lorsque par mélange de ces deux produits, on pourra obtenir un fluide homogène.

Il est clair que l'addition d'un agent tensio-actif compatible à un adhésif aura pour conséquence normale l'abaissement de l'enthalpie interfaciale liquide-air (autrement dit de la tension superficielle) de cet adhésif ; c'est dire que l'on obtiendra nécessairement une diminution du facteur $\gamma_{LA}$. On a pu montrer que ladite tension superficielle $\gamma_{LA}$ pour être optimale devrait être inférieure à l'enthalpie interfaciale solide-air ($\gamma_S$) de la surface du bois, et il est donc souhaitable le plus souvent d'employer un tensio-actif qui, en qualité et en quantité, induise un $\gamma_{LA} \leqq \gamma_S$.

La mesure de ce $\gamma_{LA}$ s'effectue par des méthodes connues de mesure de la tension superficielle du mélange adhésif et agent tensio-actif. Par ailleurs, si l'on veut que $\gamma_{LA}$ soit au plus égal à $\gamma_S$, on pourra avantageusement déterminer $\gamma_S$ par l'une des méthodes connues sous le nom de méthode de ZISMAN, méthode de NEUMAN et SELL , ou méthode de GIRIFALCO et GOOD. On notera incidemment, que la détermination à priori de $\gamma_{LA}$ pour l'adhésif non additionné de tensio-actif, et de $\gamma_S$ pour la surface du bois à coller permettra immédiatement de se rendre compte si l'adhésif dont on envisage l'utilisation, est convenablement approprié.

Mais on a remarqué que les tensio-actifs compatibles tout en provoquant nécessairement une diminution de la valeur de $\gamma_{LA}$ pouvaient simultanément entraîner une augmentation du facteur $(\cos\theta - 1)$, ce qui pourrait conduire à une augmentation du $E_W$ C'est pourquoi, le procédé selon la présente invention consiste à mesurer également l'angle de raccordement adhésif-substrat de façon à essayer de minimiser également le facteur $(\cos\theta - 1)$ en choisissant un tensio-actif convenable.

Les essais systématiques effectués ont montré que :

- dans la recherche des conditions de compatibilité entre l'adhésif et le tensio-actif, on aura avantage à utiliser les éléments connus de la théorie de diffusion entre deux fluides, théorie qui fait intervenir les tensions superficielles, par rapport à l'air, de chacun de ces composés ;

- que la concentration du tensio-actif dans l'adhésif doit rester faible (généralement entre 0,1 et 5 parties en poids pour 100 parties d'adhésif), car on sait que , trés généralement, au dessus d'un certain pourcentage de tensio-actif, la tension superficielle du mélange ne varie pratiquement plus ;

- il est généralement souhaitable de choisir un agent tensio-actif ayant un H.L.B compris entre 7 et 10 ; de plus, on peut donner certaines indications sur les choix dans la nature des agents tensio-actif ;

- pour les adhésifs urée-formol on préférera un agent tensio-actif anionique ayant une tendance hydrophile ;

- pour les adhésifs mélamine-urée-formol, on utilisera de préférence un agent tensio-actif anionique à caractère lypophile;

- pour les adhésifs phénoliques, on utilisera un agent tensio-actif non ionique de type éthoxylé de préférence ;

- enfin, il semble que les tensio-actifs fluorés soient utilisables pour des adhésifs de différentes classes.

Les exemples non limitatifs suivants illustrent l'invention.

On avait l'intention de réaliser le collage de deux planches de divers bois ; pour ce faire, on a mesuré dans un premier essai les enthalpies interfaciales de ces bois et on a trouvé :

. pour l'épicéa séché dans des conditions brutales : < 50 mN/m ;

. pour des placages séchés à 175° C environ :

Hêtre : environ 52,50 mN/m
Peuplier :environ 50,00 mN/m
Pin maritime : environ 54,00 mN/m

On a utilisé comme colles, des adhésifs divers et l'on a modifié ces adhésifs à l'aide d'agents tensio-actifs ; on a ainsi mesuré $\gamma_{LA}$(en mN/m), l'enthalpie interfaciale liquide-air de chacun des adhésifs (avec ou sans additif), $\Theta$ l'angle de raccordement liquide-substrat résultant de l'équilibre du dépôt de 2 mm$^3$ de chacun des adhésifs sur les surfaces du bois.

On a obtenu les résultats qui figurent au tableau 1.

### TABLEAU 1

| ADHESIFS | $\gamma_{LA}$ (mN/m) | Cos θ moyen | $E_W : \gamma_{LA}(Cos\theta - 1)$ (mN/m) |
|---|---|---|---|
| Résine Urée-formol | 75,0 | 0,29 | − 53,2 |
| Résine Urée-formol + produit fluorifique. (exemple 0,2 pp de polyfluoroalkyle) | 45,0 | 0,31 | − 31,0 |
| Résine Mélamine Urée-formol (MUF) | 67,0 | 0,6 | − 26,8 |
| Résine MUF + 0,2 pp d'un ester de sorbitan | 37,5 | 0,4 | − 22,5 |
| Résine Phénol-formol (PF) | 68,0 | − 0,31 | − 89,1 |
| Résine PF + 0,4 pp d'un alkyl benzène sulfonate | 47,0 | − 0,25 | − 58,8 |
| Résine vinylique à durcisseur | 54,0 | − 0,17 | − 63,2 |
| Résine vinylique à durcisseur + 2,5 pp d'alcool polyvinylique | 45,0 | − 0,17 | − 52,6 |
| Résine Résorcine formol | 44,5 | 0,24 | − 33,8 |
| Résine Resorcine formol + 0,4 pp d'un alkyl benzène sulfonate | 44,0 | 0,24 | − 33,4 |

Ces résultats montrent que grâce à l'utilisation d'agents tensio-actifs compatibles avec chacune des résines, il a été possible de diminuer nettement les valeurs de l'énergie libre $E_W$ nécessaire au mouillage de la surface des bois, ce qui toutes choses égales par ailleurs a permis d'améliorer :
- la contrainte de rupture du collage de 15 à 30 % ;
- le pourcentage de rupture dans le bois de 25 à 90 % ;
- la fiabilité du collage.

**Revendications**

1. Procédé pour obtenir l'optimisation de collage entre deux pièces dont l'une au moins est en bois, caractérisé en ce que l'on ajoute à l'adhésif un agent tensio-actif compatible qui permet de minimaliser la valeur de l'énergie libre de mouillage $E_W$ de ladite surface du bois par le mélange adhésif (adhésif et agent tensio-actif) utilisé.

2. Procédé selon la revendication 1, caractérisé en ce que ladite minimalisation de $E_W$ est obtenue par mesure de l'enthalpie interfaciale liquide-air $\gamma_{LA}$ du mélange adhésif utilisé et par mesure de l'angle $\Theta$ de raccordement adhésif-substrat.

3. Procédé selon l'une des revendications 1 et 2, caractérisé en ce qu'on utilise un agent tensio-actif compatible de façon à ce que $\gamma_{LA}$ soit au plus égale à l'enthalpie interfaciale solide-air ($\gamma_S$) de la surface du bois à coller.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CH-A- 443 535 (MO OCH DOMSJÖ) <br> * Revendication 1; colonne 3, lignes 44-63 * | 1 | C 09 J 5/00 |
| X | PATENT ABSTRACTS OF JAPAN, vol. 9, no. 166 (C-290)[1889]m 11 juillet 1985; & JP-A-60 40 178 (MITSUI TOATSU KAGAKU K.K.) 02-03-1985 | 1 | |
| X | PATENT ABSTRACTS OF JAPAN, vol. 9, no. 145 (C-287)[1868], 20 juin 1985; & JP-A-60 28 477 (MITSUI TOATSU KAGAKU K.K.) 13-02-1985 | 1 | |

DOMAINES TECHNIQUES RECHERCHES (Int. Cl.4)

C 09 J

Le présent rapport de recherche a été établi pour toutes les revendications

| Lieu de la recherche | Date d'achèvement de la recherche | Examinateur |
|---|---|---|
| LA HAYE | 04-08-1987 | GIRARD Y.A. |